# EUROPEAN PATENT APPLICATION

(11) **EP 3 231 764 A1**
(43) Date of publication of application: **18.10.2017**
(21) Application number: 14820900.0
(22) Date of filing: 10.12.2014
(51) Int. Cl.: B66D 5/14

(54) **BRAKE ASSEMBLY OF ELEVATOR SYSTEM**

(71) Applicant: Otis Elevator Company, Farmington CT 06032 (US)
(72) Inventor: ILLAN, Juan Antonio, 28914 Leganés (ES)
(74) Representative: Schmitt-Nilson Schraud Waibel Wohlfrom Patentanwälte Partnerschaft mbB
(86) International application number: PCT/ES2014/070908
(87) International publication number: WO 2016/092125

(57) **Abstract**

An elevator system **(10)** is comprised of a car **(22),** and a shaft **(46)** operatively connected to the car and configured to rotate for movement of the car through the elevator system. A brake assembly **(44)** is comprised of a disk **(56)** connected to and configured to rotate along with the shaft. Movable plates **(60, 62)** are placed on respective opposite sides of the disk and configured to move axially toward and away from the disk. Electromagnets are configured to respectively move the movable plates away from the disk. Elastic elements **(64, 66)** are configured to respectively move the movable plates toward the disk. The disk is free to move axially, and is designed to stop the movement of the car by stopping the rotation of the shaft when the rotation of the disk is stopped by friction from contact of the movable plates with the disk when the elastic elements move the movable plates toward the disk.

## Description

### Background information on the invention

This invention relates generally to an elevator system, and more specifically to a brake assembly for an elevator system that does not have a machine room.

An elevator system without a conventional machine room is comprised of a car and a counterweight that are located in an elevator shaft. The car and counterweight are configured to move up and down in the elevator shaft, carrying passengers or cargo from one floor to another. The cable (e.g. comprised of numerous round tension cables or flat belts) connects the car and the counterweight to each other. A motorized, non-geared drive unit is located on the upper part of the elevator shaft, and is comprised of a drive pulley that engages the cable (typically by traction) to drive it, and the car and the counterweight are moved as the drive pulley rotates. A controller controls system operation. When a call is made for a desired destination (for example, a floor), the controller sends a signal to the drive unit to raise or lower the car to the floor and then to apply a brake (e.g. a disc brake or a clutch) to the drive unit as the car approaches the floor. The brake has a direct mechanical link to the drive pulley. When an emergency stop is registered, the brake is applied immediately to the drive unit.

More specifically, the brake may be comprised of a stationary element (such as a steel plate) attached to the drive unit, plus a pair of movable steel plates. Two elastic elements (e.g., springs, O-rings, or a combination thereof) are connected respectively to the movable plates, and an electromagnet (e.g., a coil) is configured to move the movable plates. A disc, which is comprised of a friction liner attached on both sides of the disc, is placed between the fixed plate and the movable plates. The disc is attached to a shaft that rotates with the drive unit when the car is moving, and thus the disc is rotating. The shaft extends in the brake. The coil and, for example, the springs are placed in a housing that is placed on one side of the movable plates, opposite to the fixed plate and the disc.

When braking becomes necessary, it is initiated by deactivating the coil. As a result, a magnetic force that holds the movable plates against the coil disappears, and the springs force the movable plates against the disc, which, in turn, moves against the fixed plate so that the disk is between the fixed plate and the movable plates. This establishes a contact between one lining and both of the movable plates, and the other lining is pressed against the fixed plate. In this way, torque (by means of friction) is generated and applied by the contact, which torque stops the rotation of the disc. Since the disc is attached to the shaft, stoppage is transmitted to the shaft and the drive unit, and stops the movement of the car. When it is necessary for the car to move again, the controller sends a signal and current is sent to the coil to pull the movable plates away from the disc and the fixed plate, allowing rotation of the disc and shaft, and, in turn, allowing movement of the car.

It may be required (e.g., by a regulation or standard) that the brake be redundant so that each movable plate (that is, each brake half) is able to provide an amount of torque to decelerate or halt 100% of a full system load. It may also be required that the complete brake be capable of decelerating 125% of the full load. In a conventional elevator system, the torque applied by each movable plate stops 100% of the full load. The torque of each movable plate is added to that of the other movable plate to establish a total brake torque (i.e., equal to twice the torque of a single movable plate) for 150% of the full load. Thus, the complete brake decelerates with an intensity of greater than 150% of the full load.

### Brief description of the invention

According to a non-limitative example of the invention, a brake assembly of an elevator system is provided. The elevator system is comprised of a car and a shaft operatively connected to the car and configured to rotate in order to move the car through the elevator system. The brake assembly is comprised of a disc connected to and configured to rotate with the shaft. A first movable plate and a second movable plate are placed on respective opposite sides of the disc and configured to move axially toward and away from the disc. A first and a second electromagnet are configured to move respectively the movable plates away from the disc. A first and a second elastic element are configured to move respectively the movable plates toward the disc. The disc is free to move axially and is configured to stop the movement of the car by stopping the rotation of the shaft when the rotation of the disc is stopped by friction of the contact of the movable plates with the disc when the elastic elements move the movable plates toward the disc.

### Brief description of the drawings

The subject matter that is considered to be the invention is indicated specifically and claimed distinctly in the claims at the end of the specification. The features, characteristics, and advantages of the invention described above are evident in the following detailed description, together with the attached drawings, in which:
Fig. 1 is a transversal view of a cross section of a non-limitative example of an elevator system without a machine room.
Fig. 2 is a perspective view of a non-limitative example of a drive unit of the elevator system illustrated in Fig. 1.
Fig. 3 is a schematic lateral view of a brake assembly of the drive unit illustrated in Fig. 2, according to a non-limitative example of the invention.

### Detailed description of the invention

Referring to the drawings, a non-limitative example of an elevator system is indicated in a general manner by **10.** Although elevator system is **10** described in this invention as being an elevator system without a machine room (in which a drive unit of the elevator system **10** is located in an elevator shaft rather than in a conventional machine room), it should be easy to see that elevator system **10** may be any suitable type of elevator system. And, although elevator system **10** is described herein as being implemented during power failures and/or emergency stoppages, it should also be easy to see that elevator system **10** may be implemented under any other suitable conditions and with any suitable magnitude and type of deceleration.

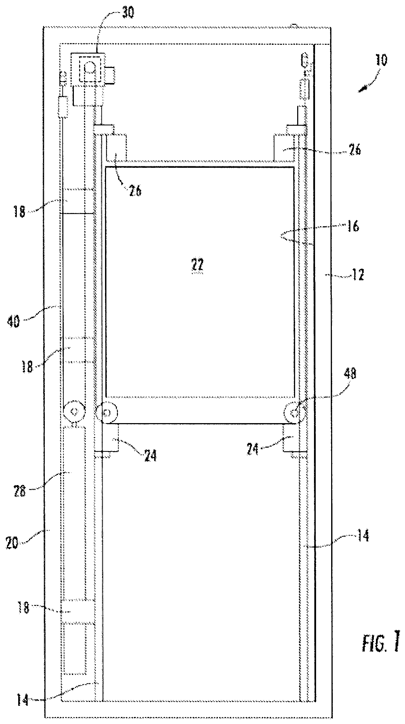

Fig. 1 shows the system for elevator **10.** Elevator shaft **12** has at least one car guide rail **14** that is affixed to an inner wall **16** of the elevator shaft **12,** and it can be attached to the counterweight supports **18,** which, in turn, can be attached to the opposite interior wall **20.** In the design, elevator shaft **12** includes two rails **14.** Alternatively, the rails **14** may be attached directly to the opposite interior wall **20** or using separate supports (not shown). A car **22** is supported within and configured to move through the elevator shaft **12** along the rails **14,** which guide the vertical movement of the car **22** in the elevator shaft **12.** The car **22** has guide assemblies **24, 26** placed respectively in a lower part and an upper part of the car **22,** to maintain appropriate alignment of the car **22** as it moves along the rails **14.** The car **22** is connected to a counterweight **28,** which is moved up and down the elevator shaft **12** as the car **22** transports passengers or cargo from one floor to another.

The counterweight supports **18** effectively define a space that extends over the entire height of the elevator shaft **12,** for movement of the counterweight **28.** The term "counterweight **28"** as used in this report, includes a counterweight assembly that may be comprised of various components as should be readily seen by technical expert. The counterweight **28** is moved opposite to the car **22,** as is known with a conventional elevator system. The counterweight **28** is guided by counterweight guide rails (not shown) mounted inside the elevator shaft **12.**

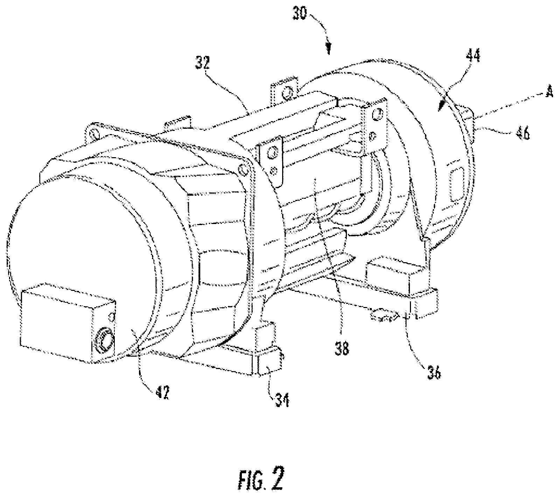

Fig. 2 illustrates a drive unit without gears, according to a non-limitative example of the invention, which drive unit is generally indicated by **30,** and is configured to drive the movement of the car **22** through the elevator shaft **12.** The drive unit **30** is located in the upper part of the elevator shaft **12.** More specifically, the drive unit **30** is placed and supported in an assembly location - such as on a shelf (not shown) - above at least one of the counterweight's guide rails. Supporting the drive unit **30** above the counterweight guide rail(s) eliminates the need for a separate machine room, as required in a conventional elevator system. The elevator system **10** requires much less overhead room in the elevator shaft **12** than do conventional elevator systems, and it eliminates the need for a separate machine room. The configuration of the cable and the placement of the elevator shaft **12** as illustrated in Fig. 1 are only examples, and the information provided in this invention may be used in other configurations of the elevator system **10.**

The drive unit **30** is comprised of a longitudinal housing **32** that has a first base **34** and a second base **36.** A drive pulley **38** is placed inside the housing **32,** which defines many areas (e.g. grooves) for receiving the cable **40** (Fig. 1). The cable **40** may include, for example, several round tension cables **40** or flat traction belts **40.** A motor **42** is placed on one end of the drive unit **30,** and a disc-type or clutch-type brake assembly, according to a non-limitative example, is generally indicated by **44** and is it is placed at the opposite end of the drive unit **30,** which brake assembly is operatively connected to the drive unit **30** and the car **22.** The motor **42** is connected to and rotates a shaft **46** around an axis **A** when the car **22** is moving through the elevator shaft **12.** The shaft **46** is also connected to the drive pulley **38** (alternatively, the drive pulley **38** may be an integral part of the shaft **46**)**.** The drive pulley **38** also has a direct mechanical connection to the brake assembly **44.** The drive pulley **38,** the motor **42,** the brake assembly **44,** and the shaft **46** are all placed around the axis **A.** The brake assembly **44** is configured to apply a braking force to the drive unit **30** and the car **22** such as through the shaft **46 -** as described in more detail below.

The car **22** and the counterweight **28** have pulley assemblies **48** (Fig. 1) that cooperate with the cable **40** and the drive unit **30** to raise and lower the car **22.** In one aspect of the embodiment, the drive unit **30** is suitable and is sized to be used with flat drive belts **40,** and the pulley assemblies **48** are attached to a base of the car **22.** However, the pulley assemblies **48** may be mounted at another location on the car **22,** or elsewhere in the elevator system **10,** as should be readily seen by a technical expert.

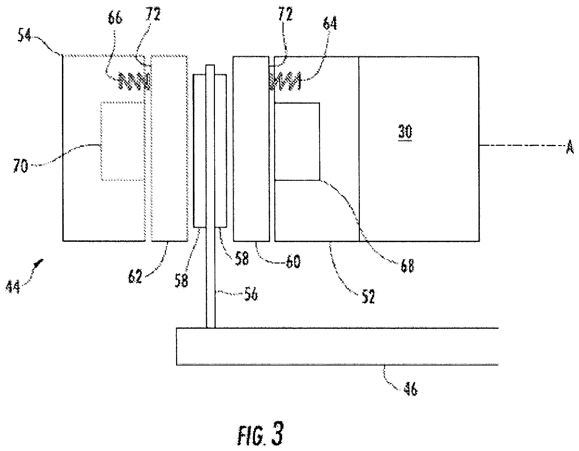

Referring to Fig. 3, the brake assembly **44** is comprised of a first housing **52** and a second housing **54,** a disc **56** that includes a friction liner **58** attached to each side of the disc **56,** a first and second movable steel plate **60, 62,** a first and second elastic element **64, 66,** and a first and a second electromagnet **68, 70** (in the form of, for example, coils **68, 70**)**.** The housings **52, 54,** the disc **56,** the movable plates **60, 62,** and the coils **68, 70,** rotate around the shaft **46.** The brake assembly **44** is connected to the shaft **46** through the disc **56,** for example, by means of splines (not shown) on the shaft **46** that engage in grooves (not shown) in a center (not shown) of the disc **56.** This connection causes the disc **56** to rotate with the shaft **46** and it allows the disc **56** to move axially along the shaft **46.** The brake assembly **44** is also secured to a nonrotating part of the drive unit **30,** whereby the first housing **52** of the brake assembly **44** is affixed to the drive unit **30** using, for example, bolts (not shown), and affixing the second housing **54** or even the first housing **52** or even the drive unit **30.**

More specifically, the movable plates **60, 62** are separated from and placed on respective opposite sides of the disc **56.** Each movable plate **60, 62** may be an annular disc or it may be formed of multiple segments. The housings **52, 54** are separated from and placed respectively over the exterior sides **72** of the movable plates **60, 62,** and an exterior side of the first housing **52** is affixed to an interior side of the drive unit **30.** According to one aspect of the embodiment, the elastic elements **64, 66** are springs **64, 66.** The springs **64, 66** are placed inside the corresponding housings **52, 54,** and each spring **64, 66** extends outside of the corresponding housing **52, 54** to be attached to the exterior side **72** of the corresponding movable plate **60, 62.** Although the springs **64, 66** may have any suitable relationship with the corresponding housings **52, 54,** in one aspect of the example the springs **64, 66** are placed, respectively, in the upper regions of the corresponding housings **52, 54.** The coils **68, 70** are placed in the corresponding housings **52, 54,** and concentric with the shaft **46,** and an inner side of each coil **68, 70** is placed flush with an inner side of the corresponding housing **52, 54.**

It should be readily seen that the liner **58** can be made of any suitable friction material. It should also be readily seen that each spring **64, 66** may be affixed inside the corresponding housing **52, 54** and/or the corresponding movable plate **60, 62,** and each coil **68, 70** may be attached inside the corresponding housing **52, 54,** in any suitable manner. It should further be readily seen that the first housing **52** may be affixed to the drive unit **30** in any suitable manner. Additionally, it should be readily seen that the housings **52, 54** may also contain noise-absorbing O-rings (not shown). In any event, it should be readily seen that the two halves of the brake assembly **44** are mirror images of each other.

Each movable plate **60, 62** is configured to be actioned by two forces - a force of the corresponding spring **64, 66,** which moves the movable plate **60, 62** toward the disc **56** (to provide a braking force) and a magnetic field from the corresponding coil **68, 70,** which moves the movable plate **60, 62** away from the disc **56.** In this regard, the movable plate(s) **60, 62** may have a finishing on them that reduces the likelihood that the corresponding linings **58** will stick to the movable plate(s) **60, 62.** It should be readily seen that, although not shown in the drawings, the movement of each movable plate **60, 62** can be guided in bushings (not shown) to ensure that the movement is parallel. The bushings may be constrained axially at one end by the first housing **52** or the drive unit **30,** and at the other end by the second housing **54.** A controller (not shown) for controlling operation of the elevator system **10** is connected to the drive unit **30** via the wiring (not shown) in the motor **42** and the coils **68, 70.** Thus, when a call to a floor is registered, the controller sends drive signals to the drive unit **30** to raise or lower the car **22** to that floor and then to actuate the brake assembly **44** to the drive unit **30** as the car approaches that floor, or when an emergency stop is registered.

In operation of the elevator system **10,** to move the car **22** up and down in the elevator shaft **12,** the controller sends drive signals through the wiring to the motor **42** to rotate the shaft **46** around the axis **A.** The rotation of the shaft **46** is transferred to the drive pulley **38,** which rotates, and, through traction drives the tension belts **40** to raise or lower the car **22** and the counterweight **28,** and, depending on how the drive signals are sent to the motor **42,** they cause the motor **42** to rotate the shaft **46.** Meanwhile, the controller also sends current through the wiring to the coils **68, 70** to produce a magnetic field that causes the movable plates **60, 62** to move axially toward the corresponding housings **52, 54.** Movement of the movable plates **60, 62** away from the disc **56** allows the disc **56** to rotate with the shaft **46.**

When a power loss is experienced, and/or emergency braking is desired, the controller stops sending the current to the coils **68, 70** and the movable plates **60, 62** are then released and secured to move axially toward the disc **56** due to the force exerted on the movable plates **60, 62** by the corresponding springs **64, 66.** When the springs **64, 66** move the movable plates **60, 62** axially away from the corresponding housings **52, 54,** a movable plate **60, 62** pushes the disc **56** into contact with the other movable plate **60, 62.** The friction resulting from the contact of the corresponding liners **58** with the movable plates **60, 62** stops the rotating disc **56.** This rotation stoppage is transferred to the shaft **46,** the drive pulley **38,** and the drive belts **40,** causing detection of the movement of the car **22** up or down in the elevator shaft **12** to be stopped.

The "mirror" design of the brake assembly **44** allows a torque amount of a movable plate **60, 62** (that is, half of the brake assembly **44**) to be applied to a respective side of the disc **56** such that the disc **56** is free to move axially (i.e., toward the other movable plate **60, 62**)**.** Thus, the respective torques of the plates **60, 62** are not added to each other to establish a total amount of torque of the brake assembly **44.** Rather, the total amount of torque is equal to the amount of torque of one single movable plate **60, 62.** Therefore, each movable plate **60, 62** is configured to provide a sufficient amount of torque to decelerate in accordance with about 125% of the total load of the elevator system **10.** However, since the respective torques of the movable plates **60, 62** are not added together, the brake assembly **44** as a whole decelerates in accordance with the same percentage of the full load. Thus, the total torque amount remains at about 125% of the full load.

With the elevator system **10,** the torques of the two movable plates **60, 62** (that is, both halves of the brake assembly **44**) are not added to each other, and thus the deceleration capability of the brake assembly **44** is only around 125% of the full load. This causes less torque resulting in smaller decelerations of the elevator system **10** during power failures and/or emergency stops, which may minimize or even eliminate passenger discomfort and resulting passenger complaints. More specifically, the total amount of torque of the brake assembly **44** may be reduced to about 25% above that of a conventional elevator system. This lower permissible torque value is particularly relevant in areas where power failures are frequent.

Compared to a conventional elevator system, the elevator system **10** allows a lower initial torque design for the complete brake assembly **44.** Also, the elevator system **10** allows the coils **68, 70** to be smaller. In addition, the elevator system **10** allows a distance between the movable plates **60, 62** (that is, a total air gap) that is substantially identical to the distance between the movable plate and the fixed plate in a conventional elevator system. Furthermore, at high speed the elevator system **10** allows the cable **40** to slide less in an emergency stoppage.

Although the invention has been described in detail in connection with just a few examples, it can be readily seen that the invention is not limited to the examples described. Rather, the invention may be modified to incorporate any number of variations, alterations, substitutions, or equivalent placements that have not been described up to this point, but which are in accordance with the spirit and scope of the invention. Additionally, although several non-limitative examples of the invention have been described, it should be understood that aspects of the invention may include only some of the examples described. Accordingly, the invention should not be regarded as limited by the foregoing description; rather it is limited only by the scope of the attached claims.

## Claims

1. An elevator system comprised of:
- An elevator shaft;
- At least one guide rail for the car that is attached in the elevator shaft;
- A car supported inside the elevator shaft and configured to move through that shaft along the rail;
- A drive unit configured to action the movement of the car through the elevator shaft;
- A shaft that defines an axis and is connected to the drive unit and rotated by it when the car is moving through the elevator shaft; and
- A brake assembly operatively connected to the drive unit and the car, configured to apply a braking force to the drive unit, which brake assembly is comprised of the following:
- A disc that is connected to the shaft and configured to rotate with it when the car is moving through the elevator shaft;
- A first and a second movable plate placed on respective opposite sides of the disc that are configured to move axially toward and away from the disc;
- A first and a second electromagnet configured to move respectively the movable plates away from the disc; and
- A first and second elastic element that are configured to move respectively, the movable plates toward the disc, the disc that is free to be moved axially, and to stop the movement of the car by stopping the rotation of the shaft when the rotation of the disc is stopped by friction of the contact of the movable plates with the disc when the elastic elements move the movable plates toward the disc.

2. The elevator system of claim 1, in which the disc has a friction liner attached to each side of the disc, and the friction of the contact of the movable plates with the corresponding liners stops the rotation of the disc.

3. The elevator system of claim 1, in which the brake assembly is also comprised of a first housing and second housing that rotate around the shaft and are separated from and placed over the respective exterior sides of the movable plates, an exterior side of the first housing is affixed to an interior side of the drive unit, and the second housing is affixed to either the first housing or the drive unit.

4. The elevator system of claim 3, in which the elastic elements are placed inside the corresponding housings, and each of the elastic elements extends outside the corresponding housing, to be attached to the exterior side of the corresponding movable plate.

5. The elevator system of claim 1, in which the elastic elements include springs.

6. The elevator system of claim 3, in which the electromagnets are placed inside the corresponding housings, and concentric to the shaft, and the interior side of each of the electromagnets is placed flush with the interior side of the corresponding housing.

7. The elevator system of claim 1, in which the electromagnets include coils.

8. A brake assembly for an elevator system comprised of a car and a shaft operatively connected to the car and configured to rotate to move the car through the elevator system, which brake assembly comprises:
- A disc connected to and configured to rotate with the shaft;
- A first and a second movable plate placed on respective opposite sides of the disc and configured to move axially toward and away from the disc;
- A first and a second electromagnet configured to move, respectively, the plates away from the disc; and
- A first and a second elastic element configured to move, respectively, the movable plates toward the disc, the disc that is free to move axially and configured to stop the movement of the car by stopping rotation of the shaft when the rotation of the disc is stopped by friction of the contact of the movable plates with the disc when the elastic elements move the movable plates toward the disc.

9. The brake assembly of claim 8, in which the disc is comprised of a friction liner attached to each side of the disc, and the contact friction of the movable plates with the corresponding liners stops rotation of the disc.

10. The brake assembly of claim 8, in which the brake assembly is also comprised of a first housing and a second housing that rotate around the shaft and separated from and placed, respectively, on the exterior sides of the movable plates, an exterior side of the first housing is affixed to the interior side of the drive unit, and the second housing is attached to either the first housing or the drive unit.

11. The brake assembly of claim 10, in which the elastic elements are placed in the corresponding housings, and each of the elastic elements extends outside of the corresponding housing to be attached to the exterior side of the corresponding movable plate.

12. The brake assembly of claim 8, in which the elastic elements are comprised of springs.

13. The brake assembly of claim 10, in which the electromagnets are placed in the corresponding housings and concentric to the shaft, and the interior side of each of the electromagnets is placed flush with an interior side of the corresponding housing.

14. The brake assembly of claim 8, in which the electromagnets include coils.
